# EUROPEAN PATENT SPECIFICATION

(11) **EP 4 127 598 B1**
(45) Date of publication and mention of the grant of the patent: **02.10.2024**
(21) Application number: 21714354.4
(22) Date of filing: 17.03.2021
(51) Int. Cl.: G01B 5/008, G01B 21/04, B23Q 17/20, B23Q 17/22, G05B 19/401

(54) **CALIBRATION DEVICE AND METHOD**
KALIBRIERVORRICHTUNG UND -VERFAHREN
DISPOSITIF ET PROCÉDÉ D'ÉTALONNAGE

(30) Priority: 23.03.2020 GB 202004192
(43) Date of publication of application: 08.02.2023
(73) Proprietor: Renishaw PLC, Wotton-under-Edge, Gloucestershire GL12 8JR (GB)
(72) Inventor: PERKINS, Shane, Gloucestershire GL12 8JR (GB)
(74) Representative: Dunn, Paul Edward
(86) International application number: PCT/GB2021/050671
(87) International publication number: WO 2021/191589

(56) References cited:
- WO-A1-2017/121990
- CN-A- 110 702 045
- US-A1- 2014 345 359
- US-A1- 2019 339 072

## Description

The present invention relates to a calibration device for use with a co-ordinate positioning apparatus, such as a machine tool. In particular, the invention relates to a reduced complexity calibration device and an associated method of using such a device.

A variety of co-ordinate positioning apparatus are known. For example, numerically controlled machine tools are widely used in the manufacturing industry to cut parts, such as metal parts for vehicles, aircraft etc. In order to cut features with a high level of accuracy (e.g. to within a few microns) it is necessary to calibrate a measurement probe on such machine tools. This is especially the case when using machine tools with one or more rotary axes (e.g. mill-turn or five-axis machine tools) in which the orientation of the part relative to the cutting tools is varied during the cutting procedure.

A key part of a typical calibration procedure, especially for a machine tool having at least one rotary axis, is establishing the position of the centre of a ring gauge, calibration sphere etc relative to a reference position of the machine tool. Once established, the centre can then act as a machine datum point in a work coordinate system on which all subsequent measurement and calibration procedures are based.

It is known to establish the sphere centre position in a plane parallel to the machine tool bed (typically termed the XY plane) using a dial test indicator or a touch probe mounted in the spindle of the machine tool. Measuring the sphere centre position along the axis perpendicular to the machine tool bed (typically termed the Z-axis) is more complicated and to date has typically been performed using various manual procedures. For example, it is known to move a reference tool of known length along the z-axis towards the calibration sphere under manual control. The reference tool is advanced towards the sphere until a gauge block of known thickness is just "nipped" between the reference tool and sphere. Such manual procedures can be inaccurate, and the results of the calibration have been found to vary from operator to operator.

International patent publication WO2017/121990 describes a calibration device that allows the centre of a calibration sphere to be established relative to the reference position of the machine tool. The device includes a calibration artefact that is biased into a known and repeatable rest position relative to its base, but which can be moved away from that rest position when a sufficiently high force is applied to it (e.g. by a calibrated length bar). A sensor is provided within the device to measure the magnitude of deflection away from the rest position (e.g. along the machine's z-axis) thereby allowing a position (e.g. in the z-axis) of the calibration device to be determined with a high level of accuracy using an extrapolation technique. The device of WO2017/121990 enables highly accurate and fully automated measurements of sphere position to be made, but the present inventors have found that the calibration device is relatively expensive to manufacture and use.

According to a first aspect of the present invention, there is provided a machine tool comprising a calibration device as defined in claim 1.

A machine tool comprising a calibration device is thus provided. The calibration device comprises a base which is preferably releasably attachable to a part of the co-ordinate positioning machine. For example, the base may be magnetically attachable to the bed of a machine tool. The calibration device also comprises a calibration artefact, such as a calibration sphere (e.g. a sphere having a radius that has been accurately measured to a traceable measurement standard), a partial sphere, a domed surface, a ring gauge or a flat that is attached to the base via a deflection mechanism.

The deflection mechanism allows the calibration artefact to move relative to the base, but the device is characterised by also comprising a lock that allows such relative motion to be prevented as and when required. In other words, the deflection mechanism can be "unlocked" thereby allowing the calibration artefact to move relative to the base or "locked" thereby preventing the calibration artefact from moving relative to the base. This arrangement allows the calibration artefact to be moved into a deflected position relative to the base by application of an external force when unlocked. For example, a known length bar or reference tool carried in the spindle of a machine may engage and move the calibration artefact relative to the base. Once moved into such a deflected position, the lock can be activated (i.e. locked) so that the calibration artefact then remains in that deflected position even when the length bar or reference tool disengages from it. The calibration artefact thus becomes immobilised relative to the base and a position of the calibration artefact is known if the deflected position is set using a reference tool (e.g. a length bar, tool of known length etc) that has a known position in the coordinate system of the co-ordinate positioning machine. The calibration artefact may then remain locked (fixed) in position and may be used for further calibration tasks.

The calibration device of the present invention thus has the advantage that it can provide a calibration artefact that has a known position within the machine coordinate system (e.g. in one, two or three dimensions), but that this can be done without having to sense when contact is made with the calibration artefact and without having to measure the amount of deflection of the calibration artefact. The present inventors have instead recognised that the calibration artefact can be moved into any arbitrary position, so long as that position can be determined in the machine tool coordinate system. The calibration device of the present invention is thus lower complexity and hence cheaper to manufacture than prior art devices such as those described in the prior patent publication WO2017/121990, whilst also removing the subjective element of nipping a gauge block of known thickness between the reference tool and a calibration sphere. Although a step of locking the calibration device is required, even if this is done manually it is possible to do so only after the machine has stopped moving; i.e. there is no need to have access to the calibration device, e.g. by overriding safety interlocks etc, when the machine is moving.

The deflection mechanism, when unlocked, may restrict motion of the calibration artefact to some extent (e.g. the motion may be restricted to translation along one or more axes). In one embodiment, the deflection mechanism may conveniently include a guide that provides, when the releasable lock is unlocked, linear translation of the calibration artefact. In other words, the deflection mechanism may include a guide that, when the releasable lock is unlocked, guides the calibration artefact to move linearly back and forth (i.e. along a linear axis). The deflection mechanism may prevent rotation of the calibration artefact. In one example, linear motion of the calibration artefact is allowed along an axis parallel with a moveable shaft of the deflection mechanism. This linear axis of motion of the calibration artefact may, in use, be approximately aligned to coincide with the longitudinal axis of a reference tool. Such a reference tool may then be moved into engagement with the calibration artefact along its longitudinal axis such that the calibration artefact is, in turn, deflected along its linear axis of motion. The length of the reference tool is, by definition, known and hence the position of the calibration artefact along that axis is known.

If the deflection mechanism limits the calibration artefact to move only along a certain axis (e.g. a linear axis of translation) then a relevant reference point defined by that artefact may be arranged to lie on or in the vicinity of that axis. In other words, the calibration artefact may conveniently lie on the linear axis. For example, the centre of a calibration sphere may be arranged to lie substantially on, and hence translate back and forth along, a linear translation axis. This prevents or reduces any external forces that are applied to the deflection mechanism (i.e. when the calibration artefact is moved) from causing off-axis motion or deflection (deformation) of the device. This in turns help to ensure the calibration artefact, once the releasable lock is locked, does not substantially change position when the deflecting force is removed (e.g. when the reference tool is disengaged). Advantageously, the deflection mechanism comprises a bias. The bias may bias the calibration artefact towards a rest position. The bias may be provided by one or more springs (e.g. coil springs). The force applied by the bias is preferably insufficient to overcome the locking force applied by the lock. Hence the bias only results in motion of the calibration artefact when the lock is in the unlocked state. In other words, when the lock is locked, the bias is insufficient to overcome the locking force and hence the calibration artefact is immobilised relative to the base. The rest position into which the calibration artefact is biased does not need to be repeatably defined (i.e. the rest position adopted by the calibration artefact has no impact on the accuracy of calibration).

The releasable lock may be implemented in a variety of ways. The releasable lock may be a remotely activatable lock. For example, it may be an electrically or pneumatically activated lock that can be automatically (non-manually) locked/unlocked by sending an appropriate command (e.g. via wires or a pneumatic line) to the device. Preferably, the releasable lock is manually activated (i.e. it is actuated by hand by an operator/user). The releasable lock thus conveniently comprises a manually activated locking member. The locking member is preferably a lock lever. Alternatively, the locking member may be a twist-lock member.

The calibration artefact may comprise a domed surface (e.g. a surface having the curvature of a large diameter sphere). One or more dimensions of the artefact may be known by prior measurement to a calibrated (traceable) standard. For example, the one or more dimensions of the artefact may have been previously measured on a coordinate measuring machine (CMM) that is calibrated to a relevant (national or international) calibration standard. Conveniently, the calibration artefact comprises a sphere. The sphere may have a known radius. A sphere of known radius is preferred for simplicity and accuracy because it is possible to determine the position of the sphere centre (e.g. in x, y, z coordinates) by measuring the position of a plurality points on the sphere's surface. The calibration sphere may be a complete sphere or a partial sphere (e.g. it may comprise only a segment of a sphere or include a flat region or recess for attachment to a stem).

The calibration artefact may provide a datum point in the work coordinate system in one, two or all three dimensions. For example, a calibration sphere may provide a three-dimensional datum point (e.g. the sphere centre). The calibration device may include both the (moveable/lockable) calibration artefact and an additional calibration artefact. For example, the device may include a (moveable/lockable) flat or domed surface and an additional artefact that is not moveable (e.g. a ring gauge or sphere that is immovably attached to the base of the device). In this manner, a datum point in the work coordinate system can be defined in three dimensions using features of both the (moveable/lockable) calibration artefact and the additional calibration artefact.

The calibration device may include a housing attached to, or formed as part of, the base. The deflection mechanism may be partially or fully contained within the housing. The deflection mechanism may comprise an elongate stem that attaches the calibration artefact to the base. The calibration artefact may be directly attached to the stem, or further components (e.g. angled wedges, extension pieces etc) may attach the calibration artefact to the stem. The orientation of the calibration artefact and stem to which it is attached may thus be selected as appropriate (e.g. to allow vertical and/or horizontal mounting of the calibration device).

The base may be mounted to the machine in a number of ways. For example, it may be bolted to the machine bed. Advantageously, the base may comprise a magnetic attachment device for releasably securing the base to a metal surface of a co-ordinate positioning machine (e.g. to the bed of a machine tool). In other words, a magnetic base may be used that can releasably attach the device to a metal surface. This allows the device to be firmly held, but easily removed.

The calibration device is attached to a machine tool. The machine tool may have at least three, at least four or at least five axes of motion. The machine tool may have at least one rotary axis. The machine tool may have at least two rotary axes. The machine tool may be a turning machine, a lathe or a mill-turn machine. The calibration device may be attached to a machine tool bed that can be moved relative to a tool holding spindle. A machine tool comprising the calibration device is thus provided.

According to a second aspect of the present invention, there is also provided a method of calibrating a machine tool as defined in claim 10. The measurement probe may be a tactile measurement probe having a stylus for contacting the artefact; e.g. a touch trigger measurement probe or an analogue (scanning) probe. Alternatively, the measurement probe may be a non-contact measurement probe. The measurement probe may be carried in a spindle of the machine tool. The measurement probe may thus be used to measure a position of the calibration artefact. For example, the x-y coordinates of a calibration sphere may be found using the measurement probe and used in combination with the z coordinates of the sphere centre known via use of the calibration tool to place the calibration artefact in the rest position.

Advantageously, the calibration artefact comprises a sphere. The centre position of the sphere may then be used to define a reference position in the local coordinate system of the co-ordinate positioning machine. This sphere centre (reference) position may be determined in the machine coordinate system and used for further calibration procedures.

In a preferred embodiment, the machine tool according to the first aspect of the invention is used in the method of the second aspect of the invention. The calibration device may then provide the calibration artefact and step (iii) of the method may comprise locking the releasable lock of the device.

The present invention will now be described, by way of example only, with reference to the accompanying drawings in which;
Figure 1 shows a multi-axis machine tool,
Figure 2 shows a prior art calibration technique that uses a calibration sphere,
Figures 3a and 3b show a machine tool and calibration device of the present invention, the calibration device comprising a lock lever in an unlocked and locked state respectively,
Figure 4 shows various internal parts of the device of figures 3a and 3b in more detail,
Figure 5 shows a further machine tool and calibration device of the present invention that comprises a twist-lock mechanism,
Figure 6 shows various internal parts of the device of figure 5 in more detail,
Figures 7a-c illustrate how the calibration device can be used to aid calibration of a machine tool, and
Figure 8 shows an alternative embodiment of the calibration device.

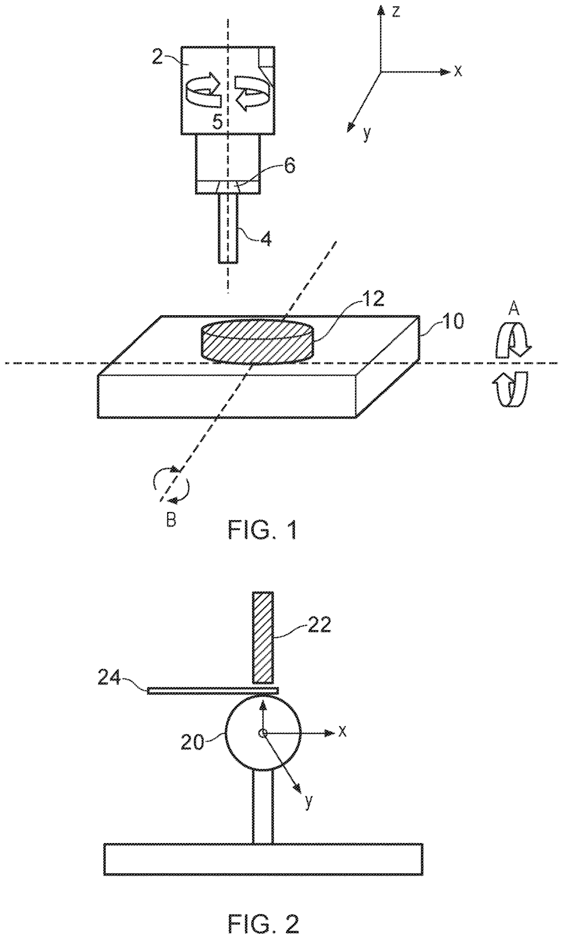

Figure 1 illustrates a multi-axis machine tool. The machine tool comprises a spindle 2 that can be rotated at high speed about what is typically termed the S-axis. The spindle 2 comprises a taper mount 6 for receiving the tapered shank of a cutting tool 4 or other accessory such as a measurement probe; this allows tools and accessories to be loaded into the spindle 2 as and when they are required. The spindle 2 can be moved about in space by the machine tool along three linear axes; these machine axes are typically termed the X, Y and Z axes. A table 10 is provided on which a workpiece 12 is mounted. The table 10 can be tilted about the A-axis and also rotated about the B-axis.

During cutting, the cutting tool 4 is rotated at high speed about the S-axis and the machine tool controller follows a list of instructions defined in a cutting program to move the tool 4 along a desired cutting path relative to the workpiece 12. The cutting path can include translational motion of the spindle along the X, Y and Z axes as well as rotational motion about the A and B axes. In order to remove the required material from the workpiece, the position of the tool tip relative to the workpiece needs to be known accurately even when rotational motion about the A and B axes occurs. A variety of techniques and devices have thus been developed over the years to perform such calibration.

As would be well known to those skilled in the art, many automated machine tool calibration techniques involve using a spindle mounted measurement probe to take various measurements of a calibration sphere (i.e. a sphere of known radius) mounted to the machine tool bed. These measurements typically rely on knowing to a high level of accuracy the location of the centre of a calibration sphere relative to the reference position of the machine tool (e.g. the origin of the x,y,z machine tool coordinate system). A variety of techniques have thus been developed over the years to measure sphere centre position accurately. Once measured, subsequent on-machine measurements (e.g. for calibration, workpiece measurement or tool measurement purposes etc) may be tied to that sphere centre position.

Referring to figure 2, a prior art technique will be described that allows the position of the centre of a calibration sphere 20 that is fixedly (immovably) mounted to the bed of the machine tool to be determined. The sphere may be fixed to the base or another structure within the machine tool where the workpieces are usually placed. The sphere may thus be mounted onto the work surface of the machine tool, which may comprise one or more rotary axes of the machine tool.

It should firstly be noted a number of techniques are known that allow the XY position of a calibration sphere to be established with a high level of accuracy. For example, a dial test indicator (DTI) may be mounted into the spindle of the machine tool and used to "clock" the diameter of the calibration sphere 20, near the equator of the sphere. This is typically done by jogging (i.e. moving under manual control) the X and Y positions until the dial indicator does not deflect when the spindle is rotated. When this has been achieved the XY position of the spindle is the centre position of the sphere.

It is also known to measure the XY sphere centre position using a touch trigger probe that is mounted in the spindle of the machine tool. The spindle rotational position (i.e. the angle of rotation about the S-axis) is oriented to zero degrees and the sphere centre is measured and the XY position of the sphere centre recorded. The spindle is then rotated by 180° and the XY position of the sphere centre is remeasured. The average between the two measured XY sphere centre positions is used as the centre location; i.e. any error through eccentric mounting of the touch probe spherical stylus relative to the rotational centre of the spindle is eliminated.

Although the above described techniques allow the XY sphere centre position to be found, they are typically unable to establish the Z position of the sphere with sufficient accuracy for machine tools having one or more rotary axes. A number of separate techniques are thus known for determining the Z-position of the sphere.

The most commonly used technique is illustrated in figure 2 and involves the use of a so-called feeler gauge block 24; this may be a block or sheet of material of known (e.g. calibrated) thickness. A reference tool 22 of known, calibrated, length is loaded into the spindle of the machine tool. The spindle is moved so that the reference tool 22 is positioned over the top dead centre of the sphere 20. A feeler gauge or gauge block 24 is positioned between the end of the reference tool 22 and the sphere 20. Using the manual "jog" function of the machine tool, the tool is manually moved down until the gauge block 24 is just "nipped" between the reference tool 22 and the sphere 20. This manual process requires the engineer to "feel" when the gauge is free to move, but there is no play or clearance gap. When this is achieved the current machine position, the length of the tool and the calibrated sphere radius are used to calculate the centre Z position of the sphere.

It is also known to use bespoke length setting devices to set the Z-position. A device called the Base-Master is made by Big Daishowa, Japan and supplied by Metrology Software Products limited, Alnwick, UK that comprises a repeatable uni-directional indicator. The indicator is mounted into the spindle of the machine tool and positioned over the XY centre of the fixed sphere. The jog control of the machine tool is used to move the spindle down until the Base-Master is just in contact with the top of the sphere, such contact being indicated by an LED mounted on the Base-Master device. The (known) length of the Base-Master, the current Z-position and the sphere radius are then used to calculate the centre of the sphere in the z-axis.

As mentioned above, WO2017/121990 describes a calibration device that allows the centre of a calibration sphere to be established relative to the reference position of the machine tool in an automated manner. The device includes a calibration artefact (e.g. a calibration sphere) that is biased into a known and repeatable rest position relative to its base by a relatively high spring force. The calibration sphere is moved away from that rest position when a sufficiently high force is applied to it by a calibrated length bar (or other reference tool) carried in the machine tool spindle. An analogue sensor is provided within the calibration device to measure the magnitude of deflection away from the rest position. Measurements of the position of the spindle (i.e. which holds the length bar) as the length bar is moved to deflect the calibration sphere are combined with the measurements of calibration sphere taken by the analogue sensor. An extrapolation technique is then used to accurately determine the position of the calibration sphere when it is in the rest position. This process is described in more detail in WO2017/121990.

Although the device of WO2017/121990 provides highly accuracy position information in a fully automated manner, the device itself is complex and potentially costly to manufacture. For example, the rest position adopted by the calibration artefact must be highly repeatable and the analogue measurement sensor must provide accurate position measurements. A separate computer is also required to combine the data from the machine tool and the calibration device to establish the rest position of the calibration artefact. This makes the apparatus relatively expensive and complicated to setup and operate.

The present invention arises from the present inventors recognising that it is not necessary to measure the position of a calibration artefact (e.g. calibration sphere) only after it has been fixed in place in a predefined position within the machine tool. Instead, the calibration sphere can be moved into an arbitrary (but known) position; e.g. by being moved along the z-axis by a reference tool (e.g. a calibrated length bar). So long as the calibration sphere is locked in place (e.g. immobilised relative to the machine tool bed on which it is mounted) before disengagement with the calibrated length bar (i.e. as that length bar is retracted), the calibration sphere can provide a known reference position within the machine tool coordinate system. This removes the need to sense contact between the length bar and calibration sphere or to measure the amount of calibration sphere deflection. A device of lower cost and complexity is thus provided. The device of the present invention and how it can be used for calibration purposes will now be described.

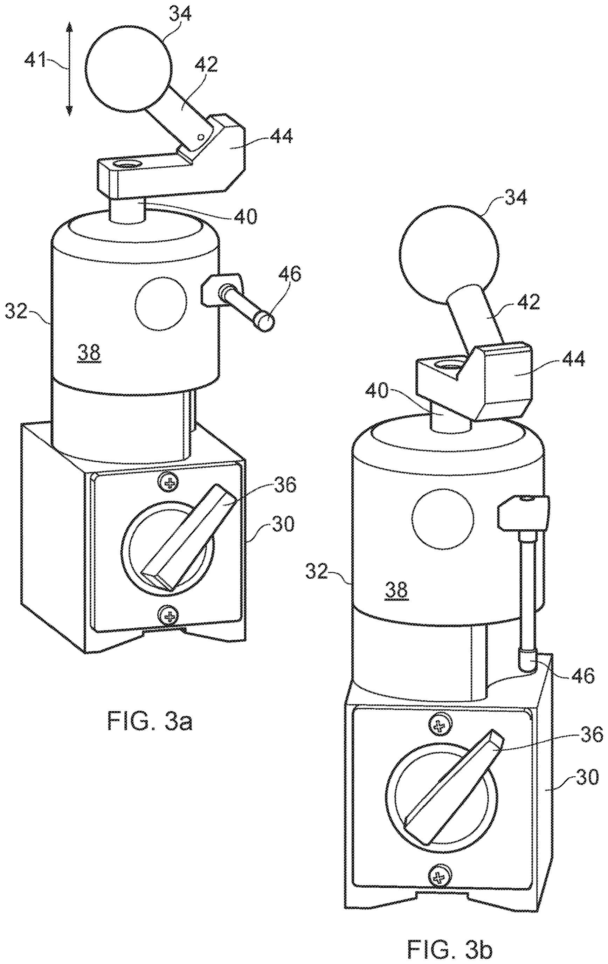

Figures 3a and 3b show a first embodiment of a machine tool of the present invention. The machine tool comprises a calibration device that comprises a magnetic base 30, a deflection mechanism 32 and a calibration sphere 34.

The magnetic base 30 is a commercially available magnetic base produced by the Misumi Group, Japan that allows attachment to a metal machine tool bed with a holding force of around 800N. The magnetic base 30 can be firmly, but releasably, secured to the machine tool bed by rotation of the knob 36 from the "off" to the "on" position. As noted below, other designs of magnetic base or different types of attachment mechanisms (e.g. bolts, screws etc) could be used to firmly secure the device to the machine tool.

The deflection mechanism 32 comprises a housing 38 secured to the top of the magnetic base 30 and a moveable shaft 40 to which the calibration sphere 34 is indirectly attached. The calibration sphere 34 is attached to a further shaft 42 that is in turn attached to the moveable shaft 40 via a forty-five degree wedge element 44. This arrangement allows the calibration sphere to be measured from different directions thereby allowing the calibration device to be mounted to a horizontal, vertical or inclined surface. It would be possible to attach the calibration sphere 34 to the moveable shaft 40 in a variety of different ways. In this example, the moveable shaft 40 can translate back and forth in the direction indicated by the arrow 41 (i.e. parallel to the longitudinal axis of the moveable shaft 40).

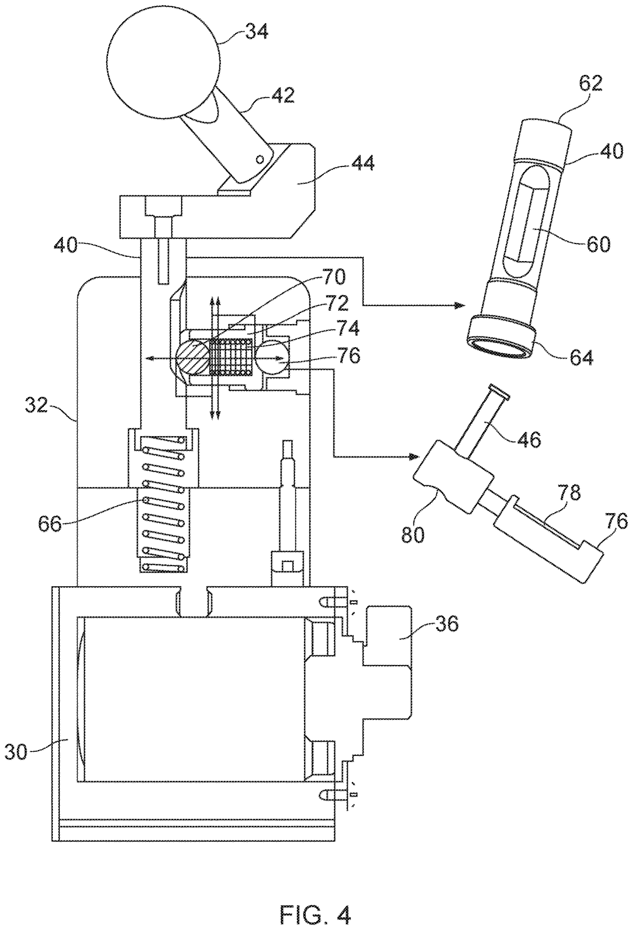

The calibration device further includes a lock contained within the housing 38; the structure and operation of this lock will be described in more detail below with reference to figure 4. The lock, which an operator can activate by hand by moving the lever 46, locks the position of the moveable shaft 40 relative to the housing 38. The lock, when in the locked state, thus immobilises the moveable shaft 40 relative to the housing 38. The locked state is shown in figure 3b. The moveable shaft 40 can, however, still translate back and forth (i.e. along the indicated direction 41) when the lock is in the unlocked state. The unlocked state is shown in figure 3a. As described below, a spring (not shown) is also provided within the housing to bias the moveable shaft 40 away from the housing 38 when in the unlocked state (i.e. the shaft is biased upwards by the spring when the device is in the orientation shown in figure 3a).

The calibration device can thus adopt a locked state (i.e. a locked configuration) in which the calibration sphere has a fixed position relative to the magnetic base 30 and an unlocked state (i.e. an unlocked configuration) in which the calibration artefact is unable to move (i.e. is immobilised) relative to the housing. It is important to note that the lock can be activated (i.e. locked) when the moveable shaft has been moved into any position relative to the housing (i.e. such movement being possible in the unlocked state). As explained below, this allows the calibration sphere to be moved into a position and then locked in that position for subsequent measurement. Movement of the calibration sphere relative to the base is prevented when the device is locked.

Figure 4 shows further details of the internal deflection mechanism and lock of the calibration device illustrated in figures 3a and 3b. Like features are thus assigned like reference numerals.

As explained above, the calibration device comprises a moveable shaft 40; this is shown in figure 4 incorporated into the housing 32 and as an individual item. The moveable shaft 40 is generally cylindrical but includes a v-shaped recess 60 that runs along a central part of its length. A first end 62 of the moveable shaft 40 includes a threaded bore to which the wedge element 44 holding the calibration sphere 34 is attached. A second end 64 of the moveable shaft 40 includes a widened portion having an aperture for receiving a coil spring 66. When assembled within the device, the second end 64 of the moveable shaft 40 engages the coil spring 66 thereby biasing the moveable shaft 40 upwards (i.e. upwards when in the orientation shown in figure 4).

The lock is provided by a lock mechanism comprising a ball 70 that engages the first end of a slidable insert 72 retained within a slot within the housing. In particular, the ball 70 is pressed into contact with the v-shaped recess 60 of the moveable shaft 40 by multiple disk springs 74 retained within the insert 72. The second end of the slidable insert 72 engages a cam shaft 76. The cam shaft 76 is generally an elongate cylinder but has a flat region 78 (i.e. of reduced diameter) for engaging the second end of the slidable insert 72. A threaded hole 80 is also provided in the cam shaft 76 to allow the radially protruding locking lever 46 to be attached thereto. Figure 4 shows the cam shaft 76 when mounted within the device and as an individual component.

Movement of the lever 46 (e.g. between the positions shown above in figures 3a and 3b) rotates the cam shaft 76 thereby moving the slidable insert radially relative to the moveable shaft 40. Movement of the lever 46 thus rotates the cam shaft 76 thereby increasing or decreasing the holding force applied to the moveable shaft 40 via the ball 70. The arrangement is configured such that the lever 46 can be moved between locked and unlocked states. In the unlocked state, the ball 70 is only pushed into the moveable shaft 40 with a light force thereby allowing the moveable shaft 40 to translate back and forth within the channel of the housing. In the unlock state and in the absence of an applied external force, the moveable shaft 40 is pushed (upwards) by the coil spring 66 thereby fully extending from the housing 32. It should be noted that, in the unlocked state, the ball 70 is still located within the v-shaped recess 60 of the moveable shaft 40 thereby restricting the axial range of movement of the moveable shaft (i.e. to prevent the spring pushing the movable shaft 40 out of the housing). The spring force of the coil spring 66 is selected to allow axial deflection of the moveable shaft 40 when engaged by, for example, a reference tool (e.g. a calibrated length bar) held in a machine tool spindle. In the locked state, the ball 70 is urged into engagement with the movable shaft 40 with enough force to immobilise that shaft 40 relative to the housing 32. Moving from the unlocked to the locked state thus locks (immobilises) the calibration sphere in its current location (e.g. which may be a position into which it has been deflected by application of an external force).

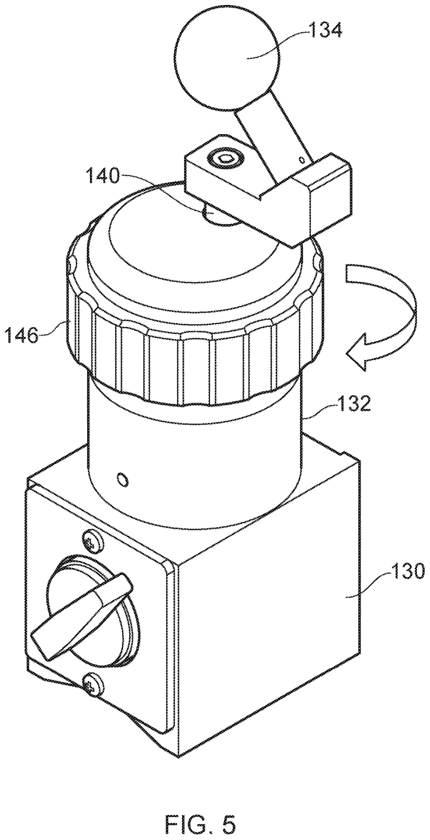

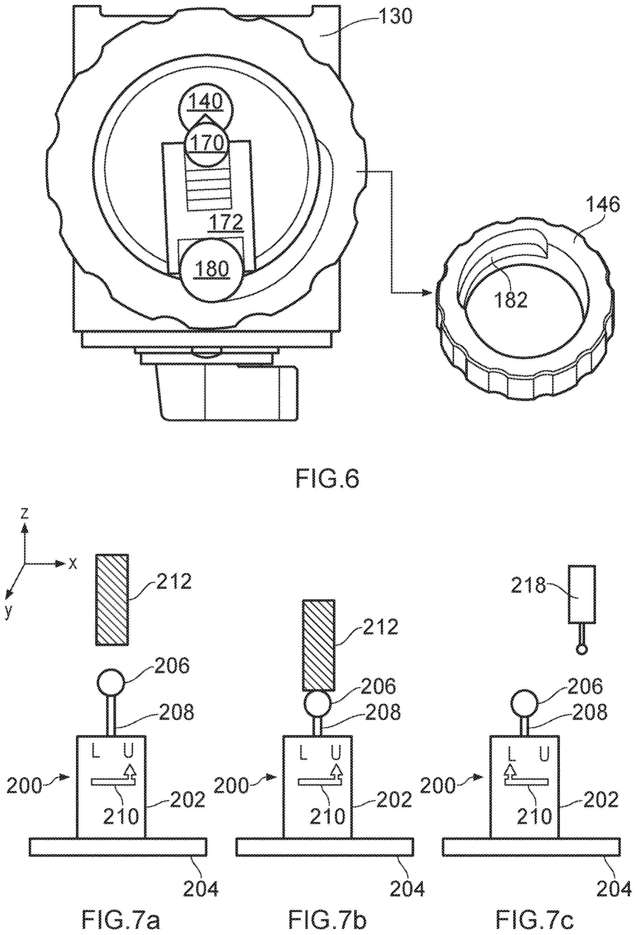

Referring to figures 5 and 6, a variant of the above described calibration device will be described that includes a different locking mechanism.

Figure 5 shows the calibration device which, similar to the device described above, comprises a magnetic base 130 to which is attached a housing 132. A calibration sphere 134 is also attached to a movable shaft 140. A lock comprising a locking ring 146 is also provided. The movable shaft 140 can move axially relative to the housing 132 when the locking ring 146 is rotated to be in an unlocked state. However, the movable shaft 140 (and hence the calibration sphere 134) is immobilised relative to the magnetic base 134 when the locking ring 146 is rotated to be in a locked configuration. Markings on the housing 132 and locking ring 146 may indicate whether the lock is locked or unlocked. The device of figure 5 thus provides the same function as the device described above with reference to figures 3a, 3b and 4 but includes a different mechanism implementing the lock.

Referring to figure 6, further details are shown of the locking mechanism of the calibration device described with reference to figure 5. In common with the arrangement of figures 3a, 3b and 4, the movable shaft 140 includes a recess into which a ball 170 is pressed by an insert 172. The insert 172 is, however urged towards the movable shaft 140 by a rotatable disc 180 that is in rolling engagement with an inner surface recess 182 formed in the locking ring 146. The recess 182 of the locking ring 146 varies in radius so that rotation of the ring causes the rotatable disc 180 to move the insert towards or away from the moveable shaft 140 to thereby apply a different amount of force via the ball 170. In particular, the arrangement is configured to provide a locked state in which the movable shaft 140 is immobilised relative to the housing 132 and an unlocked state in which the movable shaft 140 can move back and forth. A spring (not shown) is also provided to urge the distal end of the movable shaft 140 away from the housing when in the unlocked state.

Referring next to figures 7a-7c, an example of how a calibration device can be used for machine tool calibration will be described.

Figures 7a schematically illustrates a calibration device 200 having a base 202 that is firmly secured (e.g. by a magnet or bolts etc) to the bed 204 of a machine tool. The calibration device 200 comprises a calibration sphere 206 attached to the base 202 by an elongate shaft 208. The device includes a locking mechanism that can be placed in an unlocked state that allows the shaft to move in the z-direction relative to the base 202 and a locked state in which the calibration sphere 206 is immobilised relative to the case 202. In the unlocked state, the elongate shaft 208 is biased in the positive z-direction into the illustrated rest position. A manual actuator 210 allows a user to change the device between the locked (L) and unlocked (U) states, as required.

In figure 7a, a calibrated length bar 212 held in the spindle of the machine tool (not shown) is also illustrated as it is moved in the negative z-direction towards the calibration sphere 206. The position of the end of the length bar 212 is known accurately in the machine coordinate system (i.e. because, by definition, it has a known length relative to a reference point of the spindle).

Figure 7b shows the same arrangement after the calibrated length bar 212 has made contact with the calibration sphere 206. The method of making contact is performed manually by controlling the machine tool (e.g. using a jog wheel) so as to bring the end of the length bar 212 into engagement with the calibration sphere 206. After engagement between the length bar 212 and calibration sphere 206, relative motion is continued for a short distance thereby deflecting (moving) the calibration sphere 206 into the deflected position shown in figure 7b. After machine motion has ceased, a user may open the machine tool enclosure and manually switch the calibration device into the locked state using the actuator 210. The position of the centre of the calibration sphere (which has a known radius) in the z-axis is then known in the machine coordinate system (i.e. because the corresponding position of the end of the calibration length bar is known).

As shown in figure 7c, the calibrated length bar 212 can be withdrawn from the calibration sphere 206 but the position of that sphere 206 does not move any significant distance (i.e. because the calibration device is now locked). A spindle probe 218 may then be loaded into the spindle of the machine tool probe and used in a known manner to accurately establish the position of the sphere centre in the x-y plane. The calibration device then provides a calibration sphere having a location known to a high level of accuracy within the machine tool (x, y, z) coordinate system. The sphere centre can then act as a machine datum point on which all subsequent probe measurements (e.g. for calibration procedures etc) are based.

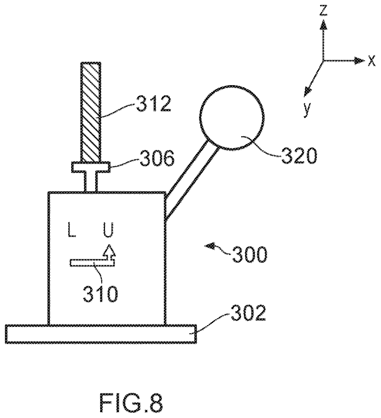

Referring to figure 8, an alternative calibration device 300 of the present invention is illustrated. The device includes a base 302 attachable to the bed of a machine tool. A calibration flat 306 (i.e. a calibration artefact having a flat surface) is attached to the base 302 via a lockable deflection mechanism. As per the examples above, a calibrated length bar 312 may deflect the calibration flat 306 and the calibration flat 306 may then be locked in position using a manual actuator 310. The position of the calibration flat 306 is thus known in the z-axis (i.e. it defines a z-axis datum position). An additional calibration sphere 320 immovably attached to the base (noting this could alternatively be secured elsewhere to the machine tool) may be used to provide a reference position in the x and y axes. In this manner, a datum position can be defined in three-dimensions in the coordinate system.

The calibration flat 306 illustrated in figure 8 may be replaced by a calibration artefact or disk that has a domed, rather than flat, contact surface. For example, the calibration disk may have an uppermost surface having a radius of curvature that lies on a large (virtual) sphere. This reduces length errors that might otherwise occur if there was any angular misalignment of the calibrated length bar 312 and the calibration disk when they are brought into contact (e.g. if either is not aligned with the z-axis as shown in figure 8). This domed disk arrangement ensures the flat ended calibrated length bar 312 will contact the highest part of the domed surface, even if there is a slight angular misalignment. Such an arrangement is particularly suited for measuring flat ended tools.

The above described embodiments are merely examples of the present invention. It would also be possible for alternative locking mechanisms, calibration artefacts, housings, bases etc to be used to implement the invention. The multi-axis machine tool described above is a multi-axis milling machine, but the technique could be used with any type of machine tool (e.g. lathes, mill-turn machines etc). Similarly, the calibration device could be used to implement a wide range of measurement and/or calibration procedures.

## Claims

1. A machine tool comprising a calibration device (200), the calibration device comprising;
a base (30; 130; 202),
a calibration artefact (34; 134) comprising a sphere, a partial sphere or a domed surface, and
a deflection mechanism (32) that attaches the calibration artefact (34; 134) to the base and allows the calibration artefact (34; 134) to be moved by a calibrated tool mounted on the machine tool relative to the base by application of an external force,
**characterised in that** the calibration device (200) further comprises a releasable lock that, when locked, immobilises the calibration artefact (34; 134) relative to the base; and the machine tool is adapted to be calibrated with a measurement probe using the method according to claim 10.

2. A machine tool according to claim 1, wherein the deflection mechanism (32) includes a guide that, when the releasable lock is unlocked, guides the calibration artefact (34; 134) to move linearly back and forth along a linear axis (41).

3. A machine tool according to claim 1, wherein the calibration artefact (34; 134) lies on the linear axis (41).

4. A machine tool according to any preceding claim, wherein the deflection mechanism (32) comprises a bias (66) to bias the calibration artefact (34; 134) towards a rest position.

5. A machine tool according to any preceding claim, wherein the releasable lock comprises a manually activated locking member (46; 146).

6. A machine tool according to claim 5, where the manually activated locking member comprises a lock lever (46) or a twist-lock member (146).

7. A machine tool according to any one of claim 1 to 4, wherein the lock comprises a remotely activatable lock.

8. A machine tool according to any preceding claim, wherein the deflection mechanism (32) comprises an elongate stem (42, 208) that attaches the calibration artefact (34; 134) to the base (30; 130; 202).

9. A machine tool according to any preceding claim, wherein the base (30; 130; 202) comprises a magnetic attachment device (30) for releasably securing the base (30; 130; 202) to a metal surface of a machine tool.

10. A method of calibrating a machine tool, the method comprising the steps of;
(i) mounting a calibrated tool and a calibration artefact (34; 134) on the machine tool, the calibration artefact (34; 134) comprising a sphere, a partial sphere or a domed surface,
(ii) using the machine tool to move the calibrated tool (212, 312) into engagement with the calibration artefact (34; 134) such that the calibration artefact (34; 134) is moved from an initial position into a deflected position, and
(iii) locking the calibration artefact (34; 134) in the deflected position such that the calibration artefact (34; 134) is maintained in the deflected position after disengagement with the calibrated tool (212,312), and
(iv) using the machine tool to move a measurement probe (218) to measure the position of a plurality of points on the surface of the calibration artefact (34; 134) locked in the known deflected position.

11. A method according to claim 10, wherein the calibration artefact (34; 134) comprises a sphere and the centre position of the sphere is used to define a reference position in the local coordinate system of the machine tool.

## Patentansprüche

1. Werkzeugmaschine mit einer Kalibriervorrichtung (200), wobei die Kalibriervorrichtung umfasst:
eine Basis (30; 130; 202),
ein Kalibrierartefakt (34; 134), das eine Kugel, eine Teilkugel oder eine gewölbte Oberfläche aufweist, und
einen Ablenkmechanismus (32), der das Kalibrierartefakt (34; 134) an der Basis befestigt und ermöglicht, dass das Kalibrierartefakt (34; 134) durch ein kalibriertes Werkzeug, das an der Werkzeugmaschine angebracht ist, durch Anlegen einer externen Kraft relativ zu der Basis bewegt wird,
**dadurch gekennzeichnet, dass** die Kalibriervorrichtung (200) ferner eine lösbare Verriegelung aufweist, die, wenn sie verriegelt ist, das Kalibrierartefakt (34; 134) relativ zu der Basis immobilisiert; und die Werkzeugmaschine angepasst ist, um mit einer Messsonde unter Verwendung des Verfahrens nach Anspruch 10 kalibriert zu werden.

2. Werkzeugmaschine nach Anspruch 1, wobei der Ablenkmechanismus (32) eine Führung aufweist, die, wenn die lösbare Verriegelung entriegelt ist, das Kalibrierartefakt (34; 134) führt, um sich linear entlang einer linearen Achse (41) vor und zurück zu bewegen.

3. Werkzeugmaschine nach Anspruch 1, wobei das Kalibrierartefakt (34; 134) auf der linearen Achse (41) liegt.

4. Werkzeugmaschine nach einem der vorhergehenden Ansprüche, wobei der Ablenkmechanismus (32) eine Vorspannung (66) aufweist, um das Kalibrierartefakt (34; 134) in Richtung einer Ruheposition vorzuspannen.

5. Werkzeugmaschine nach einem der vorhergehenden Ansprüche, wobei die lösbare Verriegelung ein manuell aktiviertes Verriegelungselement (46; 146) aufweist.

6. Werkzeugmaschine nach Anspruch 5, wobei das manuell aktivierte Verriegelungselement einen Verriegelungshebel (46) oder ein Drehverriegelungselement (146) aufweist.

7. Werkzeugmaschine nach einem der Ansprüche 1 bis 4, wobei die Verriegelung eine fernaktivierbare Verriegelung aufweist.

8. Werkzeugmaschine nach einem der vorhergehenden Ansprüche, wobei der Ablenkmechanismus (32) einen länglichen Schaft (42, 208) aufweist, der das Kalibrierartefakt (34; 134) an der Basis (30; 130; 202) befestigt.

9. Werkzeugmaschine nach einem der vorhergehenden Ansprüche, wobei die Basis (30; 130; 202) eine magnetische Befestigungsvorrichtung (30) zum lösbaren Befestigen der Basis (30; 130; 202) an einer Metalloberfläche einer Werkzeugmaschine aufweist.

10. Verfahren zum Kalibrieren einer Werkzeugmaschine, wobei das Verfahren die Schritte umfasst:
(i) Anbringen eines kalibrierten Werkzeugs und eines Kalibrierartefakts (34; 134) an der Werkzeugmaschine, wobei das Kalibrierartefakt (34; 134) eine Kugel, eine Teilkugel oder eine gewölbte Oberfläche aufweist,
(ii) Verwenden der Werkzeugmaschine, um das kalibrierte Werkzeug (212, 312) in Eingriff mit dem Kalibrierartefakt (34; 134) zu bewegen, so dass das Kalibrierartefakt (34; 134) aus einer Ausgangsposition in eine abgelenkte Position bewegt wird, und
(iii) Verriegeln des Kalibrierartefakts (34; 134) in der abgelenkten Position, so dass das Kalibrierartefakt (34; 134) nach dem Lösen von dem kalibrierten Werkzeug (212, 312) in der abgelenkten Position gehalten wird, und
(iv) Verwenden der Werkzeugmaschine, um eine Messsonde (218) zu bewegen, um die Position einer Vielzahl von Punkten auf der Oberfläche des Kalibrierartefakts (34; 134) zu messen, das in der bekannten abgelenkten Position verriegelt ist.

11. Verfahren nach Anspruch 10, wobei das Kalibrierartefakt (34; 134) eine Kugel aufweist und die Zentralposition der Kugel verwendet wird, um eine Referenzposition in dem lokalen Koordinatensystem der Werkzeugmaschine zu definieren.

## Revendications

1. Une machine-outil comprenant un dispositif d'étalonnage (200), le dispositif d'étalonnage comprenant :
une base (30 ; 130 ; 202),
un artefact d'étalonnage (34 ; 134) comprenant une sphère, une sphère partielle ou une surface bombée, et
un mécanisme de fléchissement (32) qui fixe l'artefact d'étalonnage (34 ; 134) à la base et permet à l'artefact d'étalonnage (34 ; 134) d'être déplacé par un outil étalonné monté sur la machine-outil par rapport à la base par application d'une force externe,
**caractérisé en ce que** le dispositif d'étalonnage (200) comprend en outre un verrou à déclenchement qui, lorsqu'il est verrouillé, immobilise l'artefact d'étalonnage (34 ; 134) par rapport à la base ; et la machine-outil est adaptée pour être étalonnée avec un palpeur de mesure en utilisant le procédé selon la revendication 10.

2. Une machine-outil selon la revendication 1, dans laquelle le mécanisme de fléchissement (32) comprend un guide qui, lorsque le verrou à déclenchement est déverrouillé, guide l'artefact d'étalonnage (34 ; 134) pour qu'il se déplace linéairement d'avant en arrière le long d'un axe linéaire (41).

3. Une machine-outil selon la revendication 1, dans laquelle l'artefact d'étalonnage (34 ; 134) se trouve sur l'axe linéaire (41).

4. Une machine-outil selon l'une quelconque des revendications précédentes, dans laquelle le mécanisme de fléchissement (32) comprend une polarisation (66) pour solliciter l'artefact d'étalonnage (34 ; 134) vers une position de repos.

5. Une machine-outil selon l'une quelconque des revendications précédentes, dans laquelle le verrou à déclenchement comprend un élément de verrouillage actionné manuellement (46 ; 146).

6. Une machine-outil selon la revendication 5, dans laquelle l'élément de verrouillage actionné manuellement comprend un levier de verrouillage (46) ou un élément de verrouillage par rotation (146).

7. Une machine-outil selon l'une quelconque des revendications 1 à 4, dans laquelle le verrou comprend un verrou actionnable à distance.

8. Une machine-outil selon l'une quelconque des revendications précédentes, dans laquelle le mécanisme de fléchissement (32) comprend une tige allongée (42, 208) qui fixe l'artefact d'étalonnage (34 ; 134) à la base (30 ; 130 ; 202).

9. Une machine-outil selon l'une quelconque des revendications précédentes, dans laquelle la base (30 ; 130 ; 202) comprend un dispositif de fixation magnétique (30) pour fixer de manière amovible la base (30 ; 130 ; 202) à une surface métallique d'une machine-outil.

10. Un procédé d'étalonnage d'une machine-outil, le procédé comprenant les étapes consistant à :
(i) monter un outil étalonné et un artefact d'étalonnage (34 ; 134) sur la machine-outil, l'artefact d'étalonnage (34 ; 134) comprenant une sphère, une sphère partielle ou une surface bombée,
(ii) utiliser la machine-outil pour déplacer l'outil étalonné (212, 312) en prise avec l'artefact d'étalonnage (34 ; 134) de sorte que l'artefact d'étalonnage (34 ; 134) soit déplacé d'une position initiale à une position fléchie, et
(iii) verrouiller l'artefact d'étalonnage (34 ; 134) dans la position fléchie de sorte que l'artefact d'étalonnage (34 ; 134) soit maintenu dans la position fléchie après le désengagement avec l'outil étalonné (212, 312), et
(iv) utiliser la machine-outil pour déplacer un palpeur de mesure (218) afin de mesurer la position d'une pluralité de points sur la surface de l'artefact d'étalonnage (34 ; 134) verrouillé dans la position fléchie connue.

11. Un procédé selon la revendication 10, dans lequel l'artefact d'étalonnage (34 ; 134) comprend une sphère et la position centrale de la sphère est utilisée pour définir une position de référence dans le système de coordonnées local de la machine-outil.
